(19) Europäisches Patentamt | European Patent Office | Office européen des brevets

(11) **EP 4 389 565 B1**

(12) **EUROPEAN PATENT SPECIFICATION**

(45) Date of publication and mention
of the grant of the patent:
**13.05.2026 Bulletin 2026/20**

(21) Application number: **23214814.8**

(22) Date of filing: **07.12.2023**

(51) International Patent Classification (IPC):
**B62D 11/04** (2006.01)   **B62D 11/00** (2006.01)
**A01D 69/00** (2006.01)   **A01D 34/64** (2006.01)
**A01D 34/00** (2006.01)   **B62D 11/02** (2006.01)

(52) Cooperative Patent Classification (CPC):
**B62D 11/003; A01D 34/006; A01D 34/64;**
**A01D 69/00; B62D 11/04;** B62D 11/006

(54) **GARDEN TOOL AND METHOD FOR CONTROLLING GARDEN TOOL**

GARTENWERKZEUG UND VERFAHREN ZUR STEUERUNG DES GARTENWERKZEUGS

OUTIL DE JARDINAGE ET PROCÉDÉ DE COMMANDE D'OUTIL DE JARDINAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.12.2022 CN 202211641704
20.12.2022 CN 202223423687 U**

(43) Date of publication of application:
**26.06.2024 Bulletin 2024/26**

(73) Proprietor: **Greenworks (Jiangsu) Co., Ltd.**
**Changzhou, Jiangsu 213023 (CN)**

(72) Inventors:
• **WANG, Chaoqun**
**Changzhou, 213023 (CN)**
• **WEI, Qunli**
**Changzhou, 213023 (CN)**
• **XU, Wenwei**
**Changzhou, 213023 (CN)**
• **FAN, Jun**
**Changzhou, 213023 (CN)**
• **ZHAO, Peng**
**Changzhou, 213023 (CN)**
• **XUE, Jiafu**
**Changzhou, 213023 (CN)**

(74) Representative: **Bergenstråhle & Partners AB**
**P.O. Box 17704**
**118 93 Stockholm (SE)**

(56) References cited:
WO-A1-2013/163317   CN-U- 207 978 351
US-A1- 2022 124 972

EP 4 389 565 B1

**Description**

**Technical Field**

The present invention belongs to the field of garden tools, specifically to a garden tool and control method thereof.

**Background**

In order to ensure the flexibility of movement, garden tools such as mowers and snow throwers generally require the ability to achieve small radius steering operations, or even zero radius steering operations. In the related art, steering operations are generally achieved by controlling the deflection angle of the front wheels. With such a steering structure, when achieving zero radius steering, the transmission mechanism is relatively complex, and there is relative sliding friction between the rear wheels and the ground during the steering process, which may cause damage to the lawn.

WO2013/163317 discloses a vehicle control systems that can be used, to make low- to substantially zero-radius turns. Some of the vehicle control systems utilize at least one steered wheel position sensor to generate a signal that indicates the actual position of the steerable structure, e.g., wheel to which the sensor is coupled, rather than a projected or anticipated position of that steerable structure.

**Summary**

In view of the drawbacks of the related art mentioned above, the present invention aims to provide a garden tool and control method thereof that can flexibly control the steering radius and has a simple structure.

To achieve the above and other related purposes, the present invention provides a garden tool as defined by independent claim 1 and a method for controlling the garden tool as defined by claim 14. Preferred embodiments of the present invention are defined by the dependent claims 2 to 13.

The technical effects of the present invention lie in: the present invention utilizes at least one angle sensor in the vehicle control system to generate an actual position signal indicating the position status of the steering wheel, rather than an inferred or expected position of the steering wheel, thus effectively improving response speed and response accuracy; the present invention utilizes a steering input device (such as a steering wheel) to input the operator's operating intention, and detects the actual position of the steering input device through an angle sensor to generate a signal, this signal is processed by a control module to control one or more drivable structures of the vehicle, enabling the driving motor to achieve forward and reverse rotation of the left and right wheels via a gearbox, when steering, the universal wheel change the turning angle with the control of the rotational speeds and steering for the left and right rear wheels; the present invention avoids the problem of excessive sensitivity of sensor potential changes caused by slight rotation of the steering wheel and some idle stroke on the transmission structure through deceleration transmission, ensuring smooth and stable machine operation during zero steering.

**Brief Description Of Drawings**

Fig. 1 is a perspective view of the mower provided by an embodiment of the present invention;

Fig. 2 is a top view of the mower provided by an embodiment of the present invention;

Fig. 3 is a transmission structure diagram of the control device provided in an embodiment of the present invention;

Fig. 4 is a perspective view of the deceleration transmission mechanism provided by an embodiment of the present invention;

Fig. 5 is a perspective view of the linkage transmission mechanism provided in the embodiment of the present invention;

Fig. 6 is a control schematic diagram of the mower provided in an embodiment of the present invention in a straight ahead state;

Fig. 7 is a control schematic diagram of the mower provided in an embodiment of the present invention in a left normal steering state;

Fig. 8 is a control schematic diagram of the mower provided in an embodiment of the present invention in a left zero radius steering state;

Fig. 9 is a flowchart of the steering control method for the mower provided in an embodiment of the present invention;

Fig. 10 is a schematic diagram of the mower provided in an embodiment of the present invention when steering normally;

Fig. 11 is a schematic diagram of the mower provided in an embodiment of the present invention when zero radius steering;

Fig. 12 is a curve of the voltage of the angle sensor provided by an embodiment of the present invention as a function of the angle;

Fig. 13 is a schematic diagram of the angle sensor provided in an embodiment of the present invention divided into intervals; and

Fig. 14 is a schematic diagram of the relationship between voltage and angle provided by an embodiment of the present invention.

## Description Of Embodiments

The following are specific examples to illustrate the embodiments of the present invention, and those skilled in the art can easily understand the other advantages and effects of the present invention from the content disclosed herein.

It should be noted that the illustrations provided in the following embodiments only illustrate the basic concept of the present invention in a schematic manner. Therefore, the illustrations only show the components related to the present invention and are not drawn based on the actual number, shape, and size of the components during implementation. The type, quantity, and proportion of each component during actual implementation can be arbitrarily changed, and the component layout may also be more complex.

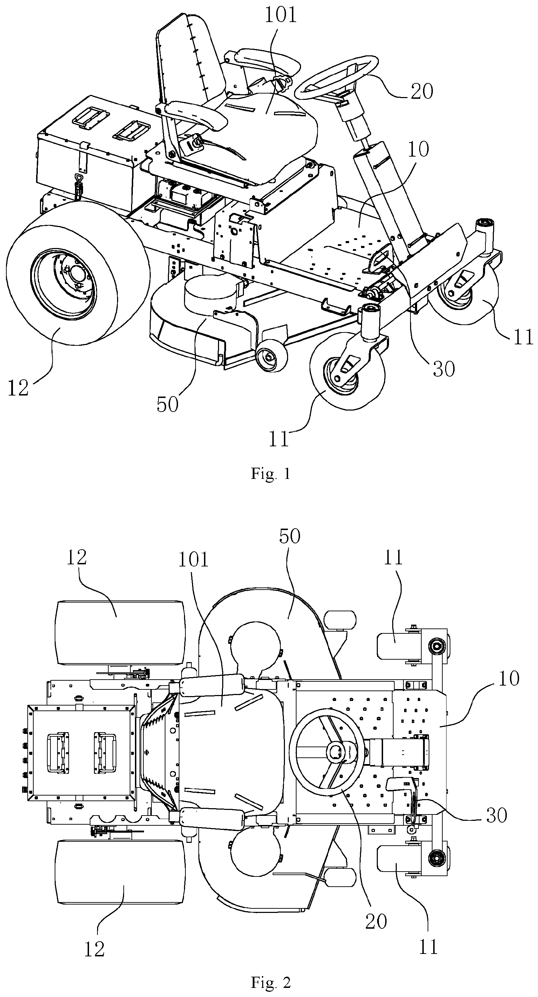

Please refer to Figs. 1-14 for a detailed explanation of the technical solution of the present invention in conjunction with a mower. It can be understood that the control device and the control method thereof provided by the present invention are not only applicable to mowers, but also to other garden tools such as snow throwers.

Please refer to Figs. 1 and 2, a mower includes a chassis 10, universal wheels 11, driving wheels 12, and a control device. Specifically, the universal wheels 11 are installed at the front end of the chassis 10; the driving wheels 12 are provided with two, and the two driving wheels 12 are placed on the left and right sides of the chassis 10. It can be understood that the front and rear position relationship between the universal wheels 11 and the driving wheels 12 is not unique. For example, in some embodiments, the driving wheels 12 can also be provided at the front end of the chassis 10 and the universal wheels 11 can be provided at the rear end of the chassis 10. The number of universal wheels 11 is not unique, for example, in some embodiments, the number of universal wheels 11 may only be one.

It can be understood that the mower also includes a cutter assembly 50. In this embodiment, the cutter assembly 50 is located below the middle of the chassis 10. Similarly, the arrangement of the cutter assembly 50 can be freely selected according to actual needs, for example, the cutter assembly 50 can also be installed at the front or rear end of the chassis 10. In this embodiment, there is also a seat 101 provided on the chassis 10, for the operator to sit. However, it can be understood that the seat 101 is not necessary for the mower, for example, the operator can also operate the mower in a standing posture.

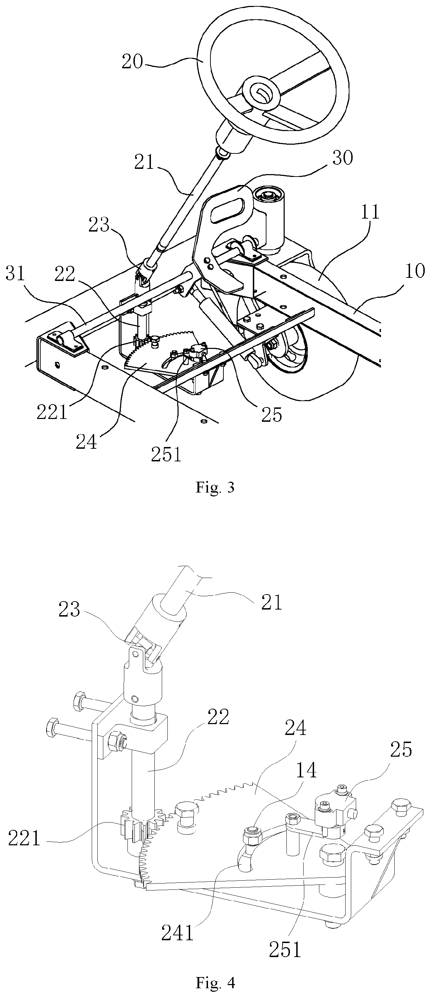

As shown in Figs. 3-8, the control device includes a steering wheel 20, a first angle sensor 25, and a control module 60.

Please refer to Figs. 3 and 4, where the steering wheel 20 is rotatably provided above the chassis 10. It can be understood that the steering wheel 20 of the present invention does not directly drive the wheel to rotate, but rather serves as an input apparatus that enables the control module 60 to determine the operator's intention based on the rotation of the steering wheel 20.

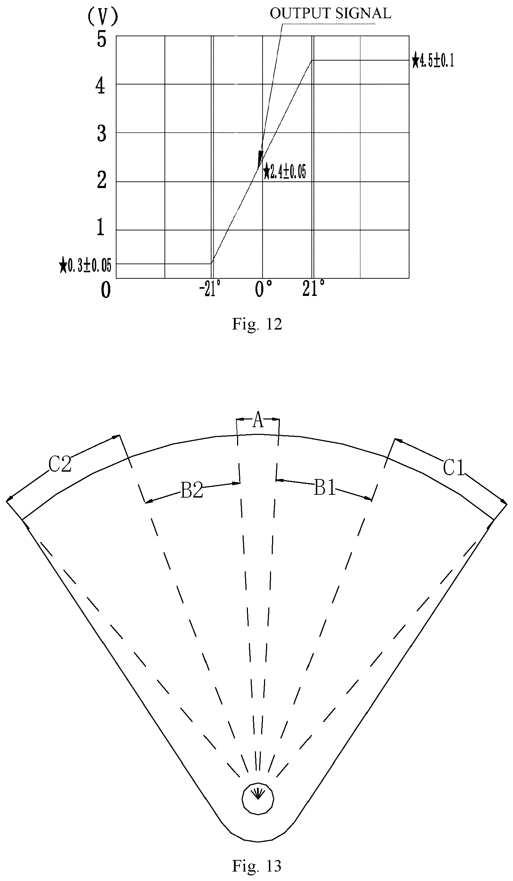

Please refer to Figs. 3 and 4, where the first angle sensor 25 is connected to the steering wheel 20 through transmission to identify the rotation of the steering wheel 20. The angle sensor of the present invention is a device that can convert mechanical motion into new signals. Specifically, it is a device that can output different voltages based on angle changes, and the voltage is linearly related to the angle. As shown in Fig. 12, the control module 60 can determine the rotational angle of the angle sensor based on the voltage change of the angle sensor.

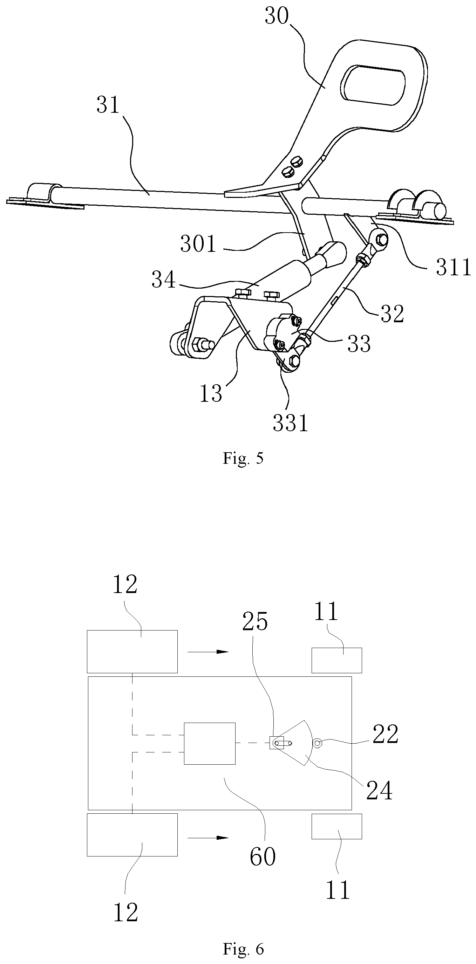

Please refer to Figs. 6-11, where the control module 60 is connected to a detection signal output terminal of the first angle sensor 25, and the control module 60 is connected to control signal input terminals of the driving wheel 12. The control module 60 is configured to: control the two driving wheels 12 to rotate at equal speeds when the rotational angle of the first angle sensor 25 is within a first preset interval A; control the two driving wheels 12 to rotate at different speeds in the same direction when the rotational angle of the first angle sensor 25 is within a second preset interval B; and control the two driving wheels 12 to rotate in reverse directions when the rotational angle of the first angle sensor 25 is within a third preset interval C; wherein, the second preset interval B is distributed at two ends of the first preset interval A, and the third preset interval C is distributed at two ends of a union of the first preset interval A and the second preset interval B. It can be understood that the steering wheel 20 is connected to the first angle sensor 25 through a deceleration transmission mechanism, and the rotational angle of the first angle sensor 25 will synchronously change in a certain proportion based on the rotational angle of the steering wheel 20. Therefore, the angle change of the first angle sensor 25 can objectively reflect the operator's driving intention. Due to the use of a deceleration transmission mechanism, significant changes in the detection data of the first angle sensor 25 only occur when the steering wheel 20 rotates for a large stroke. This can avoid the first angle sensor 25 being accidentally touched when the steering wheel 20 experiences slight shaking, and on the other hand, it can make the steering angle control smoother and improve control accuracy. In addition, the first angle sensor 25 has a certain idle stroke near the initial position. For example, when the detection angle of the first angle sensor 25 is within $\pm 1\,°$, the control module 60 does not respond in any way to prevent the steering from being too sensitive and exceeding user's expectations, and is also used to reduce deviations between different machines. When the detection angle of the first angle sensor 25 is in this area, the rotational speeds of the left and right wheels are the same, and the directions are determined by the gear switch.

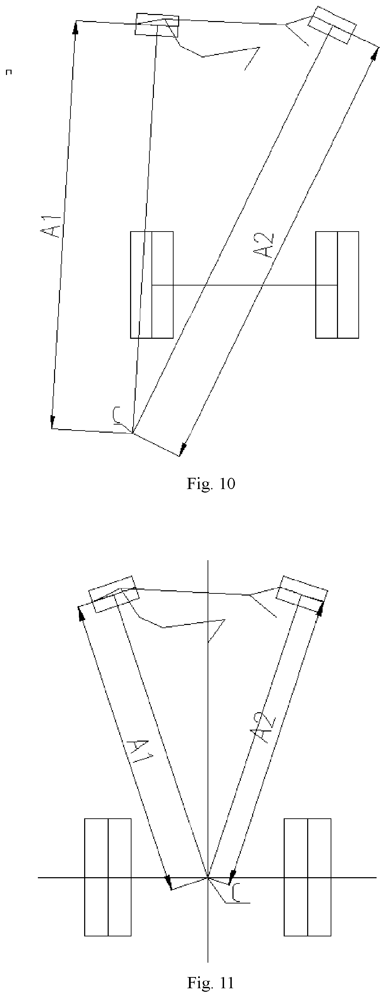

Figs. 10 and 11 are schematic top views of the vehicle's steering, demonstrating its ability to achieve essentially ideal Ackermann steering. Fig. 10 shows a non-zero radius turning, and Fig. 11 shows a zero radius turning. When the front wheels turn as shown in Fig. 10, they follow two different curved paths A1 and A2, which theoretically have a common center point C. In theory, the rotational speeds of the left and right wheels can be controlled by a controller to achieve differential turning of the left and right wheels, avoiding rubber friction on the tire tread on the wheels or damaging plants under the front wheels.

The present invention utilizes at least one angle sensor in a vehicle control system to generate an actual position signal indicating the position status of steering wheel 20, rather than an inferred or expected position of the steering wheel 20, thereby effectively improving response speed and response accuracy. The present invention utilizes a steering input device (such as steering wheel 20) to input the operator's operating intention, and detects the actual position of the steering input device through an angle sensor, and generates a signal. This signal is processed by the control module 60 to control one or more driving structures of the vehicle, enabling the driving motor to achieve forward and reverse rotation of the left and right wheels via a gearbox. When steering, the universal wheel 11 changes the turning angle under the rotational speed and steering control for the left and right rear wheels. The present invention avoids the problem of excessive sensitivity of sensor potential changes caused by slight rotation of the steering wheel 20 and some idle stroke on the transmission structure through deceleration transmission, ensuring smooth and stable machine operation during zero steering.

Please refer to Figs. 3 and 4, in an optional embodiment of the present invention, the reduction transmission mechanism includes a first transmission shaft 21, a second transmission shaft 22, a second gear 24, and a swing arm 251. Specifically, the first transmission shaft 21 is fixedly connected to the steering wheel 20 and rotatably connected to a bracket of the steering wheel 20 provided on the garden tool; the second transmission shaft 22 is rotatably connected to the chassis 10 of the garden tool, a first end of the second transmission shaft 22 is connected to the first transmission shaft 21 via a universal joint in a synchronously rotating manner, and a second end of the second transmission shaft 22 is provided with a first gear 221; the second gear 24 is rotatably connected to the chassis 10 of the garden tool and is meshed with the first gear 221, the diameter of the second gear 24 is greater than that of the first gear 221; a first end of the swing arm 251 is connected to the first angle sensor 25, and a second end of the swing arm 251 is connected to the second gear 24. Specifically, the first angle sensor 25 includes a body and a detection shaft provided rotatable to the body. The body is provided therein a detection element for identifying the rotational angle of the detection shaft. The swing arm 251 is connected to the detection shaft and can transmit the rotational motion of steering wheel 20 in real-time to the detection shaft, thereby detecting the rotational angle of steering wheel 20. The present invention has a simple structure, low manufacturing cost, and simple and convenient installation. Compared to the linkage transmission and the transmission structures such as gears and belt sprockets, the adoption of a universal wheel 11 structure reduces manufacturing difficulty, releases the limitation of the front wheel steering angle, and achieves theoretically infinite close to zero turning radius.

Please refer to Figs. 3 and 4, in a specific embodiment, the second gear 24 is a sector gear. The sector center of the second gear 24 is provided with a rotating shaft, which is rotatably connected to the chassis 10. The sector surface of the second gear 24 is provided with an arc-shaped hole 241, and the arc center of the arc-shaped hole 241 coincides with the sector center. The chassis 10 is provided with a guide pin 14, which is inserted into the arc hole 241 and forms a sliding fit with the arc hole 241. The rotation center of the swing arm 251 is coaxial with the sector center of the second gear 24. The first rotating shaft is inclinedly provided, the second transmission shaft 22 is vertically provided, and the second gear 24 is installed under the chassis 10. The present invention hides most of the transmission components under the chassis 10, simplifying the upper structure of the mower, increasing the riding space, and improving the comfort of the operator.

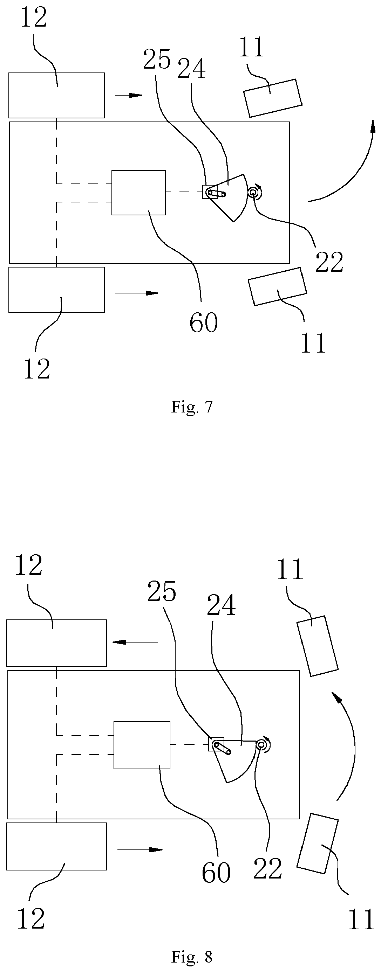

Please refer to Figs. 6 and 8, in a specific embodiment, the second preset interval B includes a first sub interval B1 and a second sub interval B2 provided at two ends of the first preset interval A. When the rotational angle of the first angle sensor 25 is within the first sub interval B1, the control module 60 controls the rotational speed of the left driving wheel 12 to be lower than that of the right driving wheel 12. When the rotational angle of the first angle sensor 25 is within the second sub interval B2, the control module 60 controls the rotational speed of the right driving wheel 12 to be lower than that of the left driving wheel 12.

The third preset interval C includes a third sub interval C1 and a fourth sub interval C2, which are provided at two ends of the union of the first preset interval A and the second preset interval B, respectively. When the rotational angle of the first angle sensor 25 is within the third sub interval C1, the control module 60 controls the left driving wheel 12 to rotate in an opposite direction. When the rotational angle of the first angle sensor 25 is within the fourth sub interval C2, the control module 60 controls the right driving wheel 12 to rotate in an opposite direction.

As shown in Fig. 12, when the first angle sensor 25 changes within a certain angle range, the output voltage of the first angle sensor 25 changes with its rotational angle, resulting in an increasing straight line between angle and voltage. The first preset interval A of the present invention should be taken from the middle area of the straight line. The second preset interval B should be areas extending from two ends of the first preset interval A, these two areas represent a left normal steering and a right normal steering, respectively. While the third preset interval C should be the two end areas extending outward from the two second preset intervals B, these two areas represent the left zero radius steering and the right zero radius steering, respectively. It can be understood that the position of the 0 point of the angle in Fig. 12 can be considered predetermined. For example, in this embodiment, the midpoint of the inclined line is used as the 0 point, which facilitates determining the direction of turning based on the positive or negative attributes of the angle.

Please refer to Figs. 3 and 5, in a specific embodiment, the control device further includes an accelerator pedal 30 and a second angle sensor 33. Specifically, the accelerator pedal 30 is connected to the second angle sensor 33 through transmission via a linkage mechanism, and the second angle sensor 33 is electrically connected to the control module 60. The control module 60 is configured to control the rotational speed increase of the driving wheel 12 when the rotational angle of the second angle sensor 33 increases.

Please refer to Figs. 3 and 5, in a specific embodiment, the accelerator pedal 30 is fixedly connected to a horizontal rotating shaft 31, which is rotatably connected to the chassis 10. The linkage mechanism includes a first swing rod 311, a link rod 32, and a second swing rod 331. The first swing rod 311 is fixedly connected to the horizontal rotating shaft 31, the second swing rod 331 is connected to the second angle sensor 33, and the two ends of the link rod 32 are respectively hinged with the first swing rod 311 and the second swing rod 331. The horizontal rotating shaft 31 is provided with a cantilever 301, and a damper 34 is provided between the cantilever 301 and the chassis 10. The two ends of the damper 34 are respectively hinged with the cantilever 301 and the chassis 10. The chassis 10 is provided with an installation seat 13, and the second angle sensor 33 and the damper 34 are installed on the installation seat 13.

In a specific embodiment, the present invention determines the rotational speed of one of the driving wheels 12 by the stepping depth of the accelerator pedal 30, that is, the rotational speed of the outside one of the driving wheels 12 during steering, and then adjusts the rotational speed of the other driving wheel 12 based on the rotational state of the steering wheel 20, with the rotational speed of the outside one as a reference. The specific control method is as follows.

When the rotational angle of the first angle sensor 25 is within the first preset interval A, the rotational speed $N_L$ of the left driving wheel 12 and the rotational speed $N_R$ of the right driving wheel 12 meet the following requirements:

$$N_L = N_R = (N_{max}/(U_{max}-U_{min}))*(U_2-U_{min}).$$

When the rotational angle of the first angle sensor 25 is within the first sub interval B1, the rotational speed $N_L$ of the left driving wheel 12 and the rotational speed $N_R$ of the right driving wheel 12 meet the following requirements:

$$N_R = (N_{max}/(U_{max}-U_{min}))*(U_2-U_{min});$$

$$N_L = ((U_1-U_a)/(U_b-U_a))*N_R.$$

When the rotational angle of the first angle sensor 25 is within the second sub interval B2, the rotational speed $N_L$ of the left driving wheel 12 and the rotational speed $N_R$ of the right driving wheel 12 meet the following requirements:

$$N_L = (N_{max}/(U_{max}-U_{min}))*(U_2-U_{min});$$

$$N_R = ((U_d\text{-}U_1)/(U_d\text{-}U_c))*N_L.$$

When the rotational angle of the first angle sensor 25 is within the third sub interval C1, the rotational speed $N_L$ of the left driving wheel 12 and the rotational speed $N_R$ of the right driving wheel 12 meet the following requirements:

$$N_R = (N_{max}/(U_{max}\text{-}U_{min}))*(U_2\text{-}U_{min});$$

$$N_L = \text{-}((U_f\text{-}U_1)/(U_f\text{-}U_e))*N_R.$$

When the rotational angle of the first angle sensor 25 is within the fourth sub interval C2, the rotational speed $N_L$ of the left driving wheel 12 and the rotational speed $N_R$ of the right driving wheel 12 meet the following requirements:

$$N_L = (N_{max}/(U_{max}\text{-}U_{min}))*(U_2\text{-}U_{min});$$

$$N_R = \text{-}((U_1\text{-}U_g)/(U_h\text{-}U_g))*N_L.$$

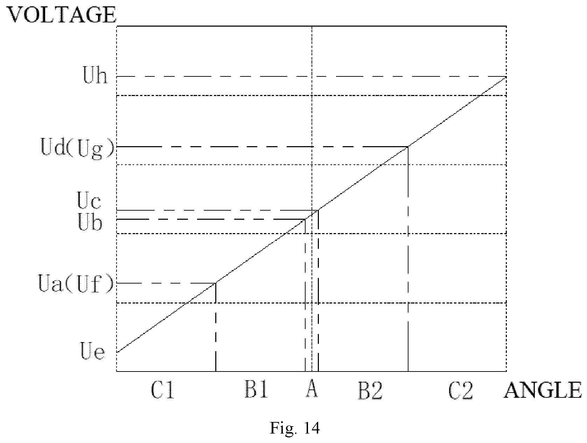

Among them, $N_{max}$ represents a maximum rotational speed of the driving wheel 12, $U_{max}$ represents a maximum output voltage of the second angle sensor 33, $U_{min}$ represents a minimum output voltage of the second angle sensor 33, and $U_2$ represents a real-time output voltage of the second angle sensor 33; $U_a$ and $U_b$ respectively represent a minimum output voltage and a maximum output voltage of the first angle sensor 25 when the rotational angle of the first angle sensor 25 is within the first sub interval B1, and $U_1$ represents a real-time output voltage of the first angle sensor 25; $U_c$ and $U_d$ respectively represent a minimum output voltage and a maximum output voltage of the first angle sensor 25 when the rotational angle of the first angle sensor 25 is within the second sub interval B2, while $U_e$ and $U_f$ respectively represent a minimum output voltage and a maximum output voltage of the first angle sensor 25 when the rotational angle of the first angle sensor 25 is within the third sub interval C1, $U_g$ and $U_h$ respectively represent a minimum output voltage and a maximum output voltage of the first angle sensor 25 when the rotational angle of the first angle sensor 25 is within the fourth sub interval B2. Please refer to Figs. 13 and 14, in a specific embodiment, the third sub interval C1, the first sub interval B1, the first preset interval A, the second sub interval B2, and the fourth sub interval C2 are adjacent in this order. Therefore, in this embodiment, $U_a = U_f$, and $U_d = U_g$.

It should be noted that in the present invention, the positive and negative rotational speeds respectively represent the different rotational directions of the driving wheel 12. That is, when the rotational speed is positive, it indicates that the driving wheel 12 rotates forward, while when the rotational speed is negative, it indicates that the driving wheel 12 rotates backward.

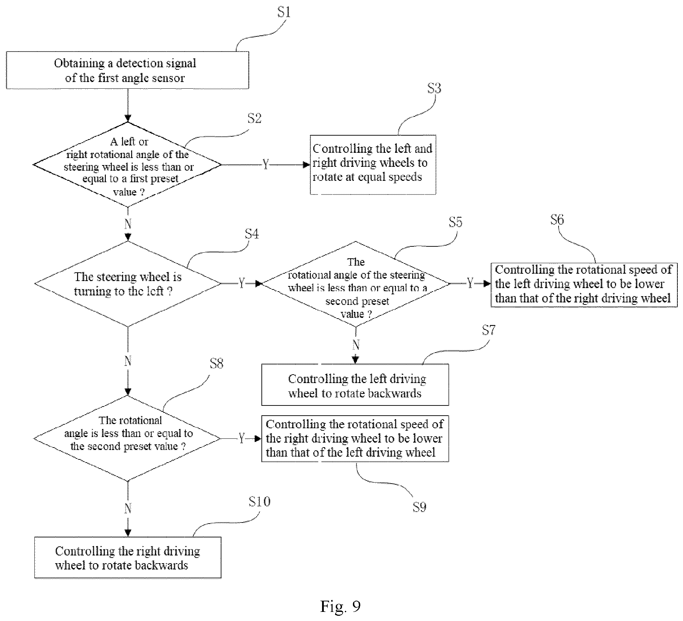

Please refer to Fig. 9, based on the above control device, the present invention also provides a control method for a garden tool, the method includes the following steps:

S1: Obtaining a detection signal of the first angle sensor 25;
Controlling the rotational speeds of the left driving wheel 12 and the right driving wheel 12 according to the detection signal, including:
S2: Determining whether a left or right rotational angle of the steering wheel 20 is less than or equal to a first preset value. If so, proceed to S3, otherwise, proceed to S4;
S3: Controlling the left and right driving wheels 12 to rotate at equal speeds;
S4: Determine whether the steering wheel 20 is turning to the left. If so, proceed to S5, otherwise, proceed to S8;
S5: Determining whether the rotational angle of the steering wheel 20 is less than or equal to a second preset value. If so, proceed to S6, otherwise, proceed to S7;
S6: Controlling the rotational speed of the left driving wheel 12 to be lower than that of the right driving wheel 12;
S7: Controlling the left driving wheel 12 to rotate backwards;
S8: Determine whether the rotational angle of steering wheel 20 is less than or equal to the second preset value. If so, proceed to S9, otherwise, proceed to S10;
S9: Controlling the rotational speed of the right driving wheel 12 to be lower than that of the left driving wheel 12; and
S10: Controlling the right driving wheel 12 to rotate backwards.

The following is a detailed explanation of the technical solution of the present invention, combined with a specific embodiment.

The specifications of the angle sensor are shown in Fig. 12. An effective mechanical angle of the sensor is $\pm$ 21°, a total of 42°, and the corresponding analog voltage output value is 0.3-4.5V. When it is in a mechanical middle position of 0°, the corresponding analog output value is 2.4V; In this embodiment, $U_a = U_f = 1.3V$; $U_b = 2.3V$; $U_c = 2.5V$; $U_d = U_g = 3.5V$; $U_e = 0.3V$; and $U_h = 4.5V$

The angle sensor is applied to the depth recognition of the accelerator pedal 30:

From the specifications of the angle sensor mentioned above, it can be seen that when the mechanical angle changes from -21° to +21°, the output voltage of the sensor corresponds to 0.3-4.5V. According to different mechanical structure designs, the actual mechanical angle range used by the sensor may vary. Here, the design is based on the maximum range, that is, the accelerator pedal 30 is from not being stepped on up to the deepest step, the mechanical angle of the angle sensor increases from -21° to +21°, and the output voltage value increases from 0.3V to 4.5V. Assuming that the user has no steering demand, the driving direction is forward, and the maximum rotational speed of the running motor is 3000 rpm. Therefore, when two motor drivers detect a voltage change in the accelerator pedal 30 sensor, the rotational speed of the driving motor increases from 0 rpm to the maximum rotational speed of 3000 rpm, and the rotational speed is directly proportional to the output voltage value of the accelerator pedal 30. Namely:

$$N = 714 * U_2 - 214.2;$$

wherein, N is the rotational speed of the motor (unit: rpm); and
$U_2$ is the output voltage value of the accelerator pedal 30 (unit: V).

The angle sensor is applied to the steering angle recognition of the steering wheel 20.

Due to the left and right rotation directions of the steering wheel 20, when the steering wheel 20 is in the middle position, the angle sensor should be in the initial installation position, meanwhile the detection angle of the angle sensor should be 0 °, which also corresponds to the initial position of the steering wheel 20. Different models and requirements may have different extreme mechanical steering angles for the steering wheel 20. Due to the secondary transmission between the steering wheel 20 and the angle sensor in the present invention, changing the transmission ratio can change the limit voltage output value of the angle sensor. From the perspective of the sensor, it is explained that the maximum mechanical angle change of the sensor is known to be 42°. In order to meet the requirements of normal driving and zero steering, this angle range needs to be divided for the following purposes:

a). forward, interval A, $\pm 1°$, 2.3~2.5V;
b). left normal turning, interval B1, -1° ~-11°, 1.3~2.3V;
c). left zero steering turning, interval C1, -11° ~ -21°, 0.3~1.3V;
d). right normal turning, interval B2, +1° ~ +11°, 2.5~3.5V;
e). right zero steering turning, interval C2, +11° ~ +21°, 3.5~4.5V;

Here, taking the forward direction as an example:

a) is used as a steering dead zone to prevent steering from being too sensitive and exceeding user's expectations, and also to reduce deviations between different machines. When in this area, the rotational speed of the left and right wheels are the same, and the directions are determined by the gear switch.

b) is used for left turning, where the rotational directions of the two wheels are the same, however, as the angle of the steering wheel 20 turning to the left increases, the rotational speed of the left wheel will decrease until the steering reaches the boundary between b) and c), and the rotational speed of the left wheel drops to 0 rpm.

c) is used for left zero steering, where the rotational directions of the two wheels are inconsistent, and as the angle of the steering wheel 20 turning to the left increases, the rotational speed of the left wheel will increase until the steering reaches its limit, reaching a negative direction of 3000 rpm, thus achieving complete left zero steering.

d) is consistent with b) in mechanism, where the rotational directions of the two wheels are the same, however, as the angle of the steering wheel 20 turning to the right increases, the rotational speed of the right wheel will decrease until the steering reaches the boundary between d) and e), and the rotational speed of the right wheel drops to 0 rpm.

e) is consistent with c) in mechanism, where the rotational directions of the two wheels are inconsistent, and as the angle of the steering wheel 20 turning to the right increases, the rotational speed of the right wheel will increase until the steering reaches its limit, reaching a negative direction of 3000 rpm, thus achieving complete right zero steering.

Taking a forward gear as an example, a calculation method for running speed in each area is as follows:

here, $N_L$ and $N_R$ are the rotational speeds of the left and right motors (unit: rpm);
$U_1$ is the output voltage value of the steering wheel 20 during steering (unit: V);
$U_2$ is the output voltage value of the accelerator pedal 30 (unit: V);

I. Forward, $U_1$ E (2.3, 2.5);

$$N_L = N_R = 714*U_2\text{-}214.2;$$

II. Left normal turning, $U_1 \in (1.3, 2.3)$;

$$N_L = (U_1\text{-}1.3)*N_R;$$

$$N_R = 714*U_2\text{-}214.2;$$

III. Left zero steering turning, U1 E (0.3, 1.3);

$$N_L = \text{-}(1.3\text{-}U_1)*N_R;$$

$$N_R = 714*U_2\text{-}214.2;$$

IV. Right normal turning, $U_1 \in (2.5, 3.5)$;

$$N_L = 714*U_2\text{-}214.2;$$

$$N_R = (3.5\text{-}U_1)*N_L;$$

V. Right zero steering turning, $U_1 \in (3.5, 4.5)$;

$$N_L = 714*U_2\text{-}214.2;$$

$$N_R = \text{-}(U_1\text{-}3.5)*N_L.$$

In summary, the present invention utilizes at least one angle sensor in the vehicle control system to generate an actual position signal indicating the position status of the steering wheel 20, rather than an inferred or expected position of the steering wheel 20, thus effectively improving response speed and response accuracy; the present invention utilizes a steering input device (such as the steering wheel 20) to input the operator's operating intention, and detects the actual position of the steering input device through an angle sensor to generate a signal, this signal is processed by the control module 60 to control one or more drivable structures of the vehicle, enabling the driving motor to achieve forward and reverse rotation of the left and right wheels via the gearbox, the universal wheels 11 change the turning angle with the control of the rotational speeds and steering for the left and right rear wheels during steering; the present invention avoids the problem of excessive sensitivity of sensor potential changes caused by slight rotation of the steering wheel 20 and some idle stroke on the transmission structure through deceleration transmission, ensuring smooth and stable machine operation during zero steering.

**Claims**

1.  A garden tool, comprising:

    a chassis (10), which is installed with a universal wheel (11), a left driving wheel (12) and a right driving wheel (12), one of the universal wheel (11) and the driving wheel (12) being located at a front portion of the chassis (10) and the other at a rear portion of the chassis (10);
    a steering wheel (20), which is rotatably connected to the chassis (10);
    a first angle sensor (25) configured to identify rotation of the steering wheel (20) and connected to the steering wheel (20) through transmission via a deceleration transmission mechanism; and

a control module (60), to which the first angle sensor (25) is electrically connected, and the control module (60) being respectively electrically connected to driving elements of the left driving wheel (12) and the right driving wheel (12), wherein
the control module (60) is configured to:

obtain a detection signal from the first angle sensor (25),
control the rotational speed of the left driving wheel (12) and the right driving wheel (12) according to the detection signal,
to rotate at equal speeds when a left or right rotational angle of the steering wheel (20) is less than or equal to a first preset value, wherein the first preset value does not include zero;
to rotate the left driving wheel (12) at a lower speed than that of the right driving wheel (12) when the steering wheel (20) is turning to the left and the rotational angle of the first angle sensor (25) is larger than the first preset value and less than or equal to a second preset value,
to rotate the left driving wheel (12) backwards when the steering wheel (20) is turning to the left and the rotational angle of the first angle sensor (25) is larger than the second preset value,
to rotate the right driving wheel (12) at a lower speed than that of the left driving wheel (12) when the steering wheel (20) is turning to the right and the rotational angle of the first angle sensor (25) is larger than the first preset value and less than or equal to the second preset value, and
to rotate the right driving wheel (12) backwards when the steering wheel (20) is turning to the right and the rotational angle of the first angle sensor (25) is larger than the second preset value,
wherein, when a left or right rotational angle of the steering wheel (20) is less than or equal to the first preset value, the left driving wheel (12) and the right driving wheel (12) are configured to rotate at equal speeds in a same direction, wherein the first preset value does not include zero;
when the left or right rotational angle of the steering wheel (20) is larger than the first preset value and less than or equal to the second preset value, the left driving wheel (12) and the right driving wheel (12) are configured to rotate at different speeds in the same direction and
when the left or right rotational angle of the steering wheel (20) is larger than the second preset value, one of the left driving wheel (12) and the right driving wheel (12) is configured to rotate backwards and the other one is configured to rotate forwards, at equal speeds.

2. The garden tool of claim 1, wherein the deceleration transmission mechanism comprises:

a first transmission shaft (21), which is fixedly connected to the steering wheel (20) and rotatably connected to a steering wheel bracket provided on the garden tool;
a second transmission shaft (22), which is rotatably connected to the chassis (10) of the garden tool, wherein a first end of the second transmission shaft (22) is connected to the first transmission shaft (21) via a universal joint **in** a synchronously rotating manner, and a second end of the second transmission shaft (22) is provided with a first gear (221);
a second gear (24), which is rotatably connected to the chassis (10) of the garden tool and is meshed with the first gear (221), a diameter of the second gear (24) being greater than that of the first gear (221); and
a swing arm (251), a first end of the swing arm (251) being connected to the first angle sensor(25), and a second end of the swing arm (251) being connected to the second gear (24).

3. The garden tool of claim 1, wherein, when a left or right rotational angle of the steering wheel (20) is less than or equal to the first preset value, a rotational angle of the first angle sensor (25) is within a first preset interval (A) and when the left or right rotational angle of the steering wheel (20) is larger than the first preset value and less than or equal to the second preset value, the rotational angle of the first angle sensor (25) is within a second preset interval (B),

the second preset interval (B) includes a first sub interval (B1) and a second sub interval (B2) provided at two ends of the first preset interval (A), respectively;
when the rotational angle of the first angle sensor (25) is within the first sub interval (B1), the control module (60) is configured to control a rotational speed of the driving wheel (12) on a left side to be lower than that of the driving wheel (12) on a right side; and
when the rotational angle of the first angle sensor (25) is within the second sub interval (B2), the control module (60) is configured to control the rotational speed of the driving wheel (12) on the right side to be lower than that of the driving wheel (12) on the left side.

4. The garden tool of claim 3, wherein, when the left or right rotational angle of the steering wheel (20) is larger than the second preset value, the rotational angle of the first angle sensor (25) is within a third preset interval (C),

the third preset interval (C) includes a third sub interval (C1) and a fourth sub interval (C2), the third sub interval (C1) and the fourth sub interval (C2) are provided at two ends of the **union** of the first preset interval (A) and the second preset interval (B), respectively;
when the rotational angle of the first angle sensor (25) is within the third sub interval (C1), the control module (60) is configured to control the driving wheel (12) on the left side to rotate **in** an opposite direction; and
when the rotational angle of the first angle sensor (25) is within the fourth sub interval (C2), the control module (60) is configured to control the driving wheel (12) on the right side to rotate **in** an opposite direction.

5. The garden tool of claim 1, wherein the first preset interval (A) is [-1°, +1°].

6. The garden tool of claim 3, wherein,

the second preset interval (B) is [-11°, -1°) U (+1°, +11°],
wherein the first sub interval (B1) is [-11°, -1°), and the second sub interval (B2) is (+1°, +11°].

7. The garden tool of claim 4, wherein,

the third preset interval (C) is [-21°, -11°) U (+11°, +21°],
wherein the third sub interval (C1) is [-21°, -11°), and the fourth sub interval (C2) is (+11°, +21°].

8. The garden tool of claim 4, wherein the garden tool further comprises a control device, the control device comprising:

an accelerator pedal (30); and
a second angle sensor (33), wherein the accelerator pedal (30) is connected to the second angle sensor (33) through transmission via a linkage mechanism, and the second angle sensor (33) is electrically connected to the control module (60), and
wherein the control module (60) is configured to control a rotational speed of the driving wheel (12) to increase when a rotational angle of the second angle sensor (33) increases.

9. The garden tool of claim 8, wherein,

when the rotational angle of the first angle sensor (25) is within the first preset interval (A), the rotational speed $N_L$ of the driving wheel (12) on the left side and the rotational speed $N_R$ of the driving wheel (12) on the right side meet the following requirements:

$$N_L = N_R = (N_{max}/(U_{max}-U_{min}))*(U_2-U_{min});$$

wherein, $N_{max}$ represents a maximum rotational speed of the driving wheel (12), $U_{max}$ represents a maximum output voltage of the second angle sensor (33), $U_{min}$ represents a minimum output voltage of the second angle sensor (33), and $U_2$ represents a real-time output voltage of the second angle sensor (33); and

wherein an output voltage of the second angle sensor (33) increases with an increase of the rotational angle of the second angle sensor (33).

10. The garden tool of claim 8, wherein,
when the rotational angle of the first angle sensor (25) is within the first sub interval (B1), the rotational speed $N_L$ of the driving wheel (12) on the left side and the rotational speed $N_R$ of the driving wheel (12) on the right side meet the following requirements:

$$N_R = (N_{max}/(U_{max}-U_{min}))*(U_2-U_{min});$$

$$N_L = ((U_1-U_a)/(U_b-U_a))*N_R;$$

wherein, $N_{max}$ represents a maximum rotational speed of the driving wheel (12), $U_{max}$ represents a maximum output voltage of the second angle sensor (33), $U_{min}$ represents a minimum output voltage of the second angle

sensor (33), $U_2$ represents a real-time output voltage of the second angle sensor (33), $U_a$ and $U_b$ respectively represent a minimum output voltage and a maximum output voltage of the first angle sensor (25) when the rotational angle of the first angle sensor (25) is within the first sub interval (B1), and $U_1$ represents a real-time output voltage of the first angle sensor (25); and

wherein the real-time output voltage $U_1$ of the first angle sensor (25) increases with an increase of the rotational angle of the first angle sensor (25), and the real-time output voltage $U_2$ of the second angle sensor (33) increases with an increase of the rotational angle of the second angle sensor (33).

**11.** The garden tool of claim 8, wherein,

when the rotational angle of the first angle sensor (25) is within the second sub interval (B2), the rotational speed $N_L$ of the driving wheel (12) on the left side and the rotational speed $N_R$ of the driving wheel (12) on the right side meet the following requirements:

$$N_L = (N_{max}/(U_{max}-U_{min}))*(U_2-U_{min});$$

$$N_R = ((U_d-U_1)/(U_d-U_c))*N_L;$$

wherein, $N_{max}$ represents a maximum rotational speed of the driving wheel (12), $U_{max}$ represents a maximum output voltage of the second angle sensor (33), $U_{min}$ represents a minimum output voltage of the second angle sensor (33), $U_2$ represents a real-time output voltage of the second angle sensor (33), $U_c$ and $U_d$ respectively represent a minimum output voltage and a maximum output voltage of the first angle sensor (25) when the rotational angle of the first angle sensor (25) is within the second sub interval (B2), and $U_1$ represents a real-time output voltage of the first angle sensor (25); and

wherein the real-time output voltage $U_1$ of the first angle sensor (25) increases with an increase of the rotational angle of the first angle sensor (25), and the real-time output voltage $U_2$ of the second angle sensor (33) increases with an increase of the rotational angle of the second angle sensor (33).

**12.** The garden tool of claim 8, wherein,

when the rotational angle of the first angle sensor (25) is within the third sub interval (C1), the rotational speed $N_L$ of the driving wheel (12) on the left side and the rotational speed $N_R$ of the driving wheel (12) on the right side meet the following requirements:

$$N_R = (N_{max}/(U_{max}-U_{min}))*(U_2-U_{min});$$

$$N_L = -((U_f-U_1)/(U_f-U_e))*N_R;$$

wherein, $N_{max}$ represents a maximum rotational speed of the driving wheel (12), $U_{max}$ represents a maximum output voltage of the second angle sensor (33), $U_{min}$ represents a minimum output voltage of the second angle sensor (33), $U_2$ represents a real-time output voltage of the second angle sensor (33), $U_e$ and $U_f$ respectively represent a minimum output voltage and a maximum output voltage of the first angle sensor (25) when the rotational angle of the first angle sensor (25) is within the third sub interval (C1), and $U_1$ represents a real-time output voltage of the first angle sensor (25); and

wherein the real-time output voltage $U_1$ of the first angle sensor (25) increases with an increase of the rotational angle of the first angle sensor (25), and the real-time output voltage $U_2$ of the second angle sensor (33) increases with an increase of the rotational angle of the second angle sensor (33).

**13.** The garden tool of claim 8, wherein,

when the rotational angle of the first angle sensor (25) is within the fourth sub interval (C2), the rotational speed $N_L$ of the driving wheel (12) on the left side and the rotational speed $N_R$ of the driving wheel (12) on the right side meet the following requirements:

$$N_L = (N_{max}/(U_{max}-U_{min}))*(U_2-U_{min});$$

$$N_R = -((U_1\text{-}U_g)/(U_h\text{-}U_g))*N_L;$$

wherein, $N_{max}$ represents a maximum rotational speed of the driving wheel (12), $U_{max}$ represents a maximum output voltage of the second angle sensor (33), $U_{min}$ represents a minimum output voltage of the second angle sensor (33), $U_2$ represents a real-time output voltage of the second angle sensor (33), $U_g$ and $U_h$ respectively represent a minimum output voltage and a maximum output voltage of the first angle sensor (25) when the rotational angle of the first angle sensor (25) is within the fourth sub interval (C2), and $U_1$ represents a real-time output voltage of the first angle sensor (25); and

wherein the real-time output voltage $U_1$ of the first angle sensor (25) increases with an increase of the rotational angle of the first angle sensor (25), and the real-time output voltage $U_2$ of the second angle sensor (33) increases with an increase of the rotational angle of the second angle sensor (33).

14. A method for controlling

a garden tool, wherein, the garden tool comprises a first angle sensor (25) configured to identify a rotation of a steering wheel (20), the first angle sensor (25) being electrically connected to a control module (60), the control module (60) being respectively electrically connected to a left driving wheel (12) and a right driving wheel (12), the method comprises:

obtaining a detection signal of the first angle sensor (25); and
controlling rotational speeds of the left driving wheel (12) and the right driving wheel (12) according to the detection signal, comprising:

controlling the left driving wheel (12) and the right driving wheel (12) to rotate at equal speeds when a left or right rotational angle of the steering wheel (20) is less than or equal to a first preset value, wherein the first preset value does not include zero;
controlling the rotational speed of the left driving wheel (12) to be lower than that of the right driving wheel (12) when the steering wheel (20) is turning to the left and the rotational angle is larger than the first preset value and less than or equal to a second preset value;
controlling the left driving wheel (12) to rotate backwards when the steering wheel (20) is turning to the left and the rotational angle is larger than the second preset value;
controlling the rotational speed of the right driving wheel (12) to be lower than that of the left driving wheel (12) when the steering wheel (20) is turning to the right and the rotational angle is larger than the first preset value and less than or equal to the second preset value; and
controlling the right driving wheel (12) to rotate backwards when the steering wheel (20) is turning to the right and the rotational angle is larger than the second preset value, wherein,
when a left or right rotational angle of the steering wheel (20) is less than or equal to the first preset value, the left driving wheel (12) and the right driving wheel (12) rotate at equal speeds in a same direction, wherein the first preset value does not include zero;
when the left or right rotational angle of the steering wheel (20) is larger than the first preset value and less than or equal to the second preset value, the left driving wheel (12) and the right driving wheel (12) rotate at different speeds in the same direction; and
when the left or right rotational angle of the steering wheel (20) is larger than the second preset value, one of the left driving wheel (12) and the right driving wheel (12) rotates backwards and the other one is rotates forwards, at equal speeds.

**Patentansprüche**

1. Gartenwerkzeug, umfassend:

ein Chassis (10), das mit einem Universalrad (11), einem linken Antriebsrad (12) und einem rechten Antriebsrad (12) installiert ist, wobei sich eines von dem Universalrad (11) und dem Antriebsrad (12) in einem vorderen Abschnitt des Chassis (10), und das andere in einem hinteren Abschnitt des Chassis (10) befindet;
ein Lenkrad (20), das drehbar mit dem Chassis (10) verbunden ist;
einen ersten Winkelsensor (25), der konfiguriert ist, um eine Drehung des Lenkrads (20) zu identifizieren und durch ein Getriebe über einen Verzögerungsgetriebemechanismus mit dem Lenkrad (20) verbunden ist; und
ein Steuerungsmodul (60), mit dem der erste Winkelsensor (25) elektrisch verbunden ist, und das Steuerungsmodul (60) jeweils elektrisch mit Antriebselementen des linken Antriebsrads (12) und des rechten Antriebsrads (12) verbunden ist, wobei
das Steuerungsmodul (60) konfiguriert ist, um:

ein Erkennungssignal vom ersten Winkelsensor (25) zu erhalten,
die Drehgeschwindigkeit des linken Antriebsrades (12) und des rechten Antriebsrades (12) entsprechend dem Erkennungssignal zu steuern,
sich mit gleichen Geschwindigkeiten zu drehen, wenn ein linker oder rechter Drehwinkel des Lenkrads (20) kleiner oder gleich einem ersten voreingestellten Wert ist, wobei der erste voreingestellte Wert Null nicht beinhaltet;
das linke Antriebsrad (12) mit einer geringeren Geschwindigkeit als das rechte Antriebsrad (12) zu drehen, wenn sich das Lenkrad (20) nach links dreht und der Drehwinkel des ersten Winkelsensors (25) größer als der erste voreingestellte Wert und kleiner oder gleich einem zweiten voreingestellten Wert ist,
das linke Antriebsrad (12) rückwärts zu drehen, wenn sich das Lenkrad (20) nach links dreht und der Drehwinkel des ersten Winkelsensors (25) größer als der zweite voreingestellte Wert ist,
das rechte Antriebsrad (12) mit einer geringeren Geschwindigkeit als das linke Antriebsrad (12) zu drehen, wenn sich das Lenkrad (20) nach rechts dreht und der Drehwinkel des ersten Winkelsensors (25) größer als der erste voreingestellte Wert und kleiner oder gleich dem zweiten voreingestellten Wert ist, und
das rechte Antriebsrad (12) rückwärts zu drehen, wenn sich das Lenkrad (20) nach rechts dreht und der Drehwinkel des ersten Winkelsensors (25) größer als der zweite voreingestellte Wert ist,

wobei, wenn ein linker oder rechter Drehwinkel des Lenkrads (20) kleiner oder gleich dem ersten voreingestellten Wert ist, das linke Antriebsrad (12) und das rechte Antriebsrad (12) konfiguriert sind, um sich mit gleichen Geschwindigkeiten in eine gleiche Richtung zu drehen, wobei der erste voreingestellte Wert Null nicht beinhaltet; wenn der linke oder rechte Drehwinkel des Lenkrads (20) größer als der erste voreingestellte Wert und kleiner oder gleich dem zweiten voreingestellten Wert ist, das linke Antriebsrad (12) und das rechte Antriebsrad (12) konfiguriert werden, um sich mit unterschiedlichen Geschwindigkeiten in die gleiche Richtung zu drehen und wenn der linke oder rechte Drehwinkel des Lenkrads (20) größer als der zweite voreingestellte Wert sind, eines von dem linken Antriebsrad (12) und dem rechten Antriebsrad (12) konfiguriert ist, um sich rückwärts zu drehen, und das andere konfiguriert ist, um sich vorwärts zu drehen, mit gleichen Geschwindigkeiten.

2. Gartenwerkzeug nach Anspruch 1, wobei der Verzögerungsgetriebemechanismus umfasst:

eine erste Getriebewelle (21), die fest mit dem Lenkrad (20) verbunden und drehbar mit einer am Gartenwerkzeug bereitgestellten Lenkradhalterung verbunden ist;
eine zweite Getriebewelle (22), die drehbar mit dem Chassis (10) des Gartenwerkzeugs verbunden ist, wobei ein erstes Ende der zweiten Getriebewelle (22) über ein Universalgelenk in einer synchron drehenden Weise mit der ersten Getriebewelle (21) verbunden ist und ein zweites Ende der zweiten Getriebewelle (22) mit einem ersten Zahnrad (221) bereitgestellt ist;
ein zweites Zahnrad (24), das drehbar mit dem Chassis (10) des Gartenwerkzeugs verbunden ist und mit dem ersten Zahnrad (221) verzahnt ist, wobei ein Durchmesser des zweiten Zahnrads (24) größer ist als jener des ersten Zahnrads (221); und
einen Schwingarm (251), wobei ein erstes Ende des Schwingarms (251) mit dem ersten Winkelsensor (25) verbunden ist und ein zweites Ende des Schwingarms (251) mit dem zweiten Zahnrad (24) verbunden ist.

3. Gartenwerkzeug nach Anspruch 1, wobei, wenn ein linker oder rechter Drehwinkel des Lenkrads (20) kleiner oder gleich dem ersten voreingestellten Wert ist, ein Drehwinkel des ersten Winkelsensors (25) innerhalb eines ersten voreingestellten Intervalls (A) liegt und wenn der linke oder rechte Drehwinkel des Lenkrads (20) größer als der erste voreingestellte Wert und kleiner oder gleich dem zweiten voreingestellten Wert ist, der Drehwinkel des ersten Winkelsensors (25) innerhalb eines zweiten voreingestellten Intervalls (B) liegt,

das zweite voreingestellte Intervall (B) ein erstes Teilintervall (B1) und ein zweites Teilintervall (B2) beinhaltet, die jeweils an zwei Enden des ersten voreingestellten Intervalls (A) bereitgestellt sind;
wenn der Drehwinkel des ersten Winkelsensors (25) innerhalb des ersten Teilintervalls (B1) liegt, das Steuerungsmodul (60) konfiguriert ist, um eine Drehzahl des Antriebsrads (12) zu steuern, um auf einer linken Seite niedriger zu sein, als jene des Antriebsrads (12) auf einer rechten Seite; und
wenn der Drehwinkel des ersten Winkelsensors (25) innerhalb des zweiten Teilintervalls (B2) liegt, das Steuerungsmodul (60) konfiguriert ist, um die Drehzahl des Antriebsrads (12) zu steuern, um auf der rechten Seite niedriger zu sein, als jene des Antriebsrads (12) auf der linken Seite.

**4.** Gartenwerkzeug nach Anspruch 3, wobei, wenn der linke oder rechte Drehwinkel des Lenkrads (20) größer als der zweite voreingestellte Wert ist, der Drehwinkel des ersten Winkelsensors (25) innerhalb eines dritten voreingestellten Intervalls (C) liegt,

das dritte voreingestellte Intervall (C) ein drittes Teilintervall (C1) und ein viertes Teilintervall (C2) beinhaltet, wobei das dritte Teilintervall (C1) und das vierte Teilintervall (C2) jeweils an zwei Enden der Vereinigung des ersten voreingestellten Intervalls (A) und des zweiten voreingestellten Intervalls (B) bereitgestellt sind;
wenn der Drehwinkel des ersten Winkelsensors (25) innerhalb des dritten Teilintervalls (C1) liegt, das Steuerungsmodul (60) konfiguriert ist, um das Antriebsrad (12) auf der linken Seite zu steuern, um sich in eine entgegengesetzte Richtung zu drehen; und
wenn der Drehwinkel des ersten Winkelsensors (25) innerhalb des vierten Teilintervalls (C2) liegt, das Steuerungsmodul (60) konfiguriert ist, um das Antriebsrad (12) auf der rechten Seite zu steuern, um sich in eine entgegengesetzte Richtung zu drehen.

**5.** Gartenwerkzeug nach Anspruch 1, wobei das erste voreingestellte Intervall (A) [-1°, +1°]ist.

**6.** Gartenwerkzeug nach Anspruch 3, wobei

das zweite voreingestellte Intervall (B) [-11°, -1°) ∪ (+1°, +11°] ist,
wobei das erste Teilintervall (B1) [-11°, -1° ist, und das zweite Teilintervall (B2) (+1°, +11°] ist.

**7.** Gartenwerkzeug nach Anspruch 4, wobei

das dritte voreingestellte Intervall (C) [-21°, -11°) ∪ (+11°, +21°] ist,
wobei das dritte Teilintervall (C1) [-21°, -11°) ist und das vierte Teilintervall (C2) ( +11°, +21°] ist.

**8.** Gartenwerkzeug nach Anspruch 4, wobei das Gartenwerkzeug weiter eine Steuervorrichtung umfasst, wobei die Steuervorrichtung umfasst:

ein Gaspedal (30); und
einen zweiten Winkelsensor (33), wobei das Gaspedal (30) durch ein Getriebe über einen Gestängemechanismus mit dem zweiten Winkelsensor (33) verbunden ist und der zweite Winkelsensor (33) elektrisch mit dem Steuerungsmodul (60) verbunden ist, und
wobei das Steuerungsmodul (60) konfiguriert ist, um eine Drehzahl des Antriebsrades (12) zu steuern, um sich zu erhöhen, wenn sich ein Drehwinkel des zweiten Winkelsensors (33) erhöht.

**9.** Gartenwerkzeug nach Anspruch 8, wobei

wenn der Drehwinkel des ersten Winkelsensors (25) innerhalb des ersten voreingestellten Intervalls (A) liegt, die Drehzahl $N_L$ des Antriebsrads (12) auf der linken Seite und die Drehzahl $N_R$ des Antriebsrads (12) auf der rechten Seite die folgenden Anforderungen erfüllen:

$$N_L = N_R = \left(N_{max}/(U_{max} - U_{min})\right) * (U_2 - U_{min});$$

wobei $N_{max}$ eine maximale Drehzahl des Antriebsrads (12) darstellt, $U_{max}$ eine maximale Ausgangsspannung des zweiten Winkelsensors (33) darstellt, $U_{min}$ eine minimale Ausgangsspannung des zweiten Winkelsensors (33) darstellt, und $U_2$ eine Echtzeit-Ausgangsspannung des zweiten Winkelsensors (33) darstellt; und
wobei sich eine Ausgangsspannung des zweiten Winkelsensors (33) mit zunehmendem Drehwinkel des zweiten Winkelsensors (33) erhöht.

**10.** Gartenwerkzeug nach Anspruch 8, wobei

wenn der Drehwinkel des ersten Winkelsensors (25) innerhalb des ersten Teilintervalls (B1) liegt, die Drehzahl $N_L$ des Antriebsrads (12) auf der linken Seite und die Drehzahl $N_R$ des Antriebsrads (12) auf der rechten Seite die folgenden Anforderungen erfüllen:

$$N_R = \left(N_{max}/(U_{max} - U_{min})\right) * (U_2 - U_{min});$$

$$N_L = \big((U_1 - U_a)/(U_b - U_a)\big)^* N_R;$$

wobei $N_{max}$ eine maximale Drehzahl des Antriebsrads (12) darstellt, $U_{max}$ eine maximale Ausgangsspannung des zweiten Winkelsensors (33) darstellt, $U_{min}$ eine minimale Ausgangsspannung des zweiten Winkelsensors (33) darstellt, $U_2$ eine Echtzeit-Ausgangsspannung des zweiten Winkelsensors (33) darstellt, $U_a$ und $U_b$ jeweils eine minimale Ausgangsspannung und eine maximale Ausgangsspannung des ersten Winkelsensors (25) darstellen, wenn sich der Drehwinkel des ersten Winkelsensors (25) innerhalb des ersten Teilintervalls (B1) befindet, und $U_1$ eine Echtzeit-Ausgangsspannung des ersten Winkelsensors (25) darstellt; und
wobei sich die Echtzeit-Ausgangsspannung $U_1$ des ersten Winkelsensors (25) mit zunehmendem Drehwinkel des ersten Winkelsensors (25) erhöht und sich die Echtzeit-Ausgangsspannung $U_2$ des zweiten Winkelsensors (33) mit zunehmendem Drehwinkel des zweiten Winkelsensors (33) erhöht.

**11.** Gartenwerkzeug nach Anspruch 8, wobei

wenn der Drehwinkel des ersten Winkelsensors (25) innerhalb des zweiten Teilintervalls (B2) liegt, die Drehzahl $N_L$ des Antriebsrads (12) auf der linken Seite und die Drehzahl $N_R$ des Antriebsrads (12) auf der rechten Seite die folgenden Anforderungen erfüllen:

$$N_L = \big(N_{max}/(U_{max} - U_{min})\big) * (U_2 - U_{min});$$

$$N_R = \big((U_d - U_1)/(U_d - U_c)\big) * N_L;$$

wobei $N_{max}$ eine maximale Drehzahl des Antriebsrads (12) darstellt, $U_{max}$ eine maximale Ausgangsspannung des zweiten Winkelsensors (33) darstellt, $U_{min}$ eine minimale Ausgangsspannung des zweiten Winkelsensors (33) darstellt, $U_2$ eine Echtzeit-Ausgangsspannung des zweiten Winkelsensors (33) darstellt, $U_c$ und $U_d$ jeweils eine minimale Ausgangsspannung und eine maximale Ausgangsspannung des ersten Winkelsensors (25) darstellen, wenn sich der Drehwinkel des ersten Winkelsensors (25) innerhalb des zweiten Teilintervalls (B2) befindet, und $U_1$ eine Echtzeit-Ausgangsspannung des ersten Winkelsensors (25) darstellt; und
wobei sich die Echtzeit-Ausgangsspannung $U_1$ des ersten Winkelsensors (25) mit zunehmendem Drehwinkel des ersten Winkelsensors (25) erhöht und sich die Echtzeit-Ausgangsspannung $U_2$ des zweiten Winkelsensors (33) mit zunehmendem Drehwinkel des zweiten Winkelsensors (33) erhöht.

**12.** Gartenwerkzeug nach Anspruch 8, wobei

wenn der Drehwinkel des ersten Winkelsensors (25) innerhalb des dritten Teilintervalls (C1) liegt, die Drehzahl $N_L$ des Antriebsrads (12) auf der linken Seite und die Drehzahl $N_R$ des Antriebsrads (12) auf der rechten Seite die folgenden Anforderungen erfüllen:

$$N_R = \big(N_{max}/(U_{max} - U_{min})\big) * (U_2 - U_{min});$$

$$N_L = -\big((U_f - U_1)/(U_f - U_e)\big) * N_R;$$

wobei $N_{max}$ eine maximale Drehzahl des Antriebsrads (12) darstellt, $U_{max}$ eine maximale Ausgangsspannung des zweiten Winkelsensors (33) darstellt, $U_{min}$ eine minimale Ausgangsspannung des zweiten Winkelsensors (33) darstellt, $U_2$ eine Echtzeit-Ausgangsspannung des zweiten Winkelsensors (33) darstellt, $U_e$ und $U_f$ jeweils eine minimale Ausgangsspannung und eine maximale Ausgangsspannung des ersten Winkelsensors (25) darstellen, wenn sich der Drehwinkel des ersten Winkelsensors (25) innerhalb des dritten Teilintervalls (C1) befindet, und $U_1$ eine Echtzeit-Ausgangsspannung des ersten Winkelsensors (25) darstellt; und
wobei sich die Echtzeit-Ausgangsspannung $U_1$ des ersten Winkelsensors (25) mit zunehmendem Drehwinkel des ersten Winkelsensors (25) erhöht und sich die Echtzeit-Ausgangsspannung $U_2$ des zweiten Winkelsensors (33) mit zunehmendem Drehwinkel des zweiten Winkelsensors (33) erhöht.

**13.** Gartenwerkzeug nach Anspruch 8, wobei

wenn der Drehwinkel des ersten Winkelsensors (25) innerhalb des vierten Teilintervalls (C2) liegt, die Drehzahl

$N_L$ des Antriebsrads (12) auf der linken Seite und die Drehzahl $N_R$ des Antriebsrads (12) auf der rechten Seite die folgenden Anforderungen erfüllen:

$$N_L = \left(N_{max}/(U_{max} - U_{min})\right) * (U_2 - U_{min})$$

$$N_R = -\left((U_1 - U_g)/(U_h - U_g)\right) * N_L$$

wobei $N_{max}$ eine maximale Drehzahl des Antriebsrads (12) darstellt, $U_{max}$ eine maximale Ausgangsspannung des zweiten Winkelsensors (33) darstellt, $U_{min}$ eine minimale Ausgangsspannung des zweiten Winkelsensors (33) darstellt, $U_2$ eine Echtzeit-Ausgangsspannung des zweiten Winkelsensors (33) darstellt, $U_g$ und $U_h$ jeweils eine minimale Ausgangsspannung und eine maximale Ausgangsspannung des ersten Winkelsensors (25) darstellen, wenn sich der Drehwinkel des ersten Winkelsensors (25) innerhalb des vierten Teilintervalls (C2) befindet, und $U_1$ eine Echtzeit-Ausgangsspannung des ersten Winkelsensors (25) darstellt; und

wobei sich die Echtzeit-Ausgangsspannung $U_1$ des ersten Winkelsensors (25) mit zunehmendem Drehwinkel des ersten Winkelsensors (25) erhöht und sich die Echtzeit-Ausgangsspannung $U_2$ des zweiten Winkelsensors (33) mit zunehmendem Drehwinkel des zweiten Winkelsensors (33) erhöht.

14. Verfahren zur Steuerung eines Gartenwerkzeugs, wobei das Gartenwerkzeug einen ersten Winkelsensor (25) umfasst, der konfiguriert ist, um eine Drehung eines Lenkrads (20) zu identifizieren, wobei der erste Winkelsensor (25) elektrisch mit einem Steuerungsmodul (60) verbunden ist, das Steuerungsmodul (60) jeweils elektrisch mit einem linken Antriebsrad (12) und einem rechten Antriebsrad (12) verbunden ist; wobei das Verfahren umfasst:

Erhalten eines Erkennungssignals des ersten Winkelsensors (25); und
Steuern von Drehgeschwindigkeiten des linken Antriebsrades (12) und des rechten Antriebsrades (12) gemäß dem Erkennungssignal, umfassend:

Steuern des linken Antriebsrades (12) und des rechten Antriebsrades (12), um sich mit gleichen Drehzahlen zu drehen, wenn ein linker oder rechter Drehwinkel des Lenkrads (20) kleiner oder gleich einem ersten voreingestellten Wert ist, wobei der erste voreingestellte Wert Null nicht beinhaltet;
Steuern der Drehgeschwindigkeit des linken Antriebsrades (12), um niedriger als jene des rechten Antriebsrades (12) zu sein, wenn das Lenkrad (20) nach links gedreht wird und der Drehwinkel größer als der erste voreingestellte Wert und kleiner oder gleich einem zweiten voreingestellten Wert ist;
Steuern des linken Antriebsrads (12), um sich rückwärts zu drehen, wenn sich das Lenkrad (20) nach links dreht und der Drehwinkel größer als der zweite voreingestellte Wert ist;
Steuern der Drehzahl des rechten Antriebsrades (12), um niedriger ist als jene des linken Antriebsrades (12) zu sein, wenn das Lenkrad (20) nach rechts gedreht wird und der Drehwinkel größer als der erste voreingestellte Wert und kleiner oder gleich dem zweiten voreingestellten Wert ist; und
Steuern des rechten Antriebsrads (12), um sich rückwärts zu drehen, wenn sich das Lenkrad (20) nach rechts dreht und der Drehwinkel größer als der zweite voreingestellte Wert ist, wobei

wenn ein linker oder rechter Drehwinkel des Lenkrads (20) kleiner oder gleich dem ersten voreingestellten Wert ist, sich das linke Antriebsrad (12) und das rechte Antriebsrad (12) mit gleichen Geschwindigkeiten in eine gleiche Richtung drehen, wobei der erste voreingestellte Wert Null nicht beinhaltet;
wenn der linke oder rechte Drehwinkel des Lenkrads (20) größer als der erste voreingestellte Wert und kleiner oder gleich dem zweiten voreingestellten Wert ist, sich das linke Antriebsrad (12) und das rechte Antriebsrad (12) mit unterschiedlichen Geschwindigkeiten in die gleiche Richtung drehen und
wenn der linke oder rechte Drehwinkel des Lenkrads (20) größer als der zweite voreingestellte Wert sind, sich eines von dem linken Antriebsrad (12) und dem rechten Antriebsrad (12) rückwärts dreht, und sich das andere vorwärts dreht, mit gleichen Geschwindigkeiten.

## Revendications

1. Outil de jardin, comprenant :

un châssis (10), qui est équipé d'une roue universelle (11), d'un roue motrice gauche (12) et d'une roue motrice droite (12), l'une des roues universelles (11) et de la roue motrice (12) étant située au niveau d'une partie avant du châssis (10) et l'autre au niveau d'une partie arrière du châssis (10) ;

un volant (20), qui est relié de manière rotative au châssis (10) ;

un premier capteur d'angle (25) configuré pour identifier une rotation du volant (20) et relié au volant (20) par transmission via un mécanisme de transmission à décélération ; et

un module de commande (60), auquel le premier capteur d'angle (25) est relié électriquement et le module de commande (60) étant respectivement relié électriquement à des éléments moteurs de la roue motrice gauche (12) et de la roue motrice droite (12), dans lequel

le module de commande (60) est configuré pour :

obtenir un signal de détection à partir du premier capteur d'angle (25),

commander la vitesse de rotation de la roue motrice gauche (12) et de la roue motrice droite (12) selon le signal de détection,

tourner à des vitesses égales lorsqu'un angle de rotation à gauche ou à droite du volant (20) est inférieur ou égal à une première valeur prédéfinie, dans lequel la première valeur prédéfinie n'inclut pas zéro ;

faire tourner la roue motrice gauche (12) à une vitesse inférieure à celle de la roue motrice droite (12) lorsque le volant (20) tourne vers la gauche et que l'angle de rotation du premier capteur d'angle (25) est supérieur à la première valeur prédéfinie et inférieur ou égal à une seconde valeur prédéfinie,

faire tourner la roue motrice gauche (12) vers l'arrière lorsque le volant (20) tourne vers la gauche et que l'angle de rotation du premier capteur d'angle (25) est supérieur à la seconde valeur prédéfinie,

faire tourner la roue motrice droite (12) à une vitesse inférieure à celle de la roue motrice gauche (12) lorsque le volant (20) tourne vers la droite et que l'angle de rotation du premier capteur d'angle (25) est supérieur à la première valeur prédéfinie et inférieur ou égal à la seconde valeur prédéfinie, et

faire tourner la roue motrice droite (12) vers l'arrière lorsque le volant (20) tourne vers la droite et que l'angle de rotation du premier capteur d'angle (25) est supérieur à la seconde valeur prédéfinie,

dans lequel, lorsqu'un angle de rotation gauche ou droit du volant (20) est inférieur ou égal à la première valeur prédéfinie, la roue motrice gauche (12) et la roue motrice droite (12) sont configurées pour tourner à des vitesses égales dans une même direction, dans lequel la première valeur prédéfinie n'inclut pas zéro ;

lorsque l'angle de rotation gauche ou droit du volant (20) est supérieur à la première valeur prédéfinie et inférieur ou égal à la seconde valeur prédéfinie, la roue motrice gauche (12) et la roue motrice droite (12) sont configurées pour tourner à des vitesses différentes dans la même direction et

lorsque l'angle de rotation gauche ou droit du volant (20) est supérieur à la seconde valeur prédéfinie, l'une de la roue motrice gauche (12) et de la roue motrice droite (12) est configurée pour tourner vers l'arrière et l'autre est configurée pour tourner vers l'avant, à des vitesses égales.

2. Outil de jardin selon la revendication 1, dans lequel le mécanisme de transmission de décélération comprend :

un premier arbre de transmission (21), qui est relié de manière fixe au volant (20) et relié de manière rotative à un support de volant prévu sur l'outil de jardin ;

un second arbre de transmission (22), qui est relié de manière rotative au châssis (10) de l'outil de jardin, dans lequel une première extrémité du second arbre de transmission (22) est reliée au premier arbre de transmission (21) via un joint universel en tournant de manière synchrone et une seconde extrémité du second arbre de transmission (22) est munie d'un premier engrenage (221) ;

un deuxième engrenage (24), qui est relié de manière rotative au châssis (10) de l'outil de jardin et est engrené avec le premier engrenage (221), un diamètre du deuxième engrenage (24) étant supérieur à celui du premier engrenage (221) ; et

un bras oscillant (251), une première extrémité du bras oscillant (251) étant reliée au premier capteur d'angle (25) et une seconde extrémité du bras oscillant (251) étant reliée au deuxième engrenage (24).

3. Outil de jardin selon la revendication 1, dans lequel, lorsqu'un angle de rotation gauche ou droit du volant (20) est inférieur ou égal à la première valeur prédéfinie, un angle de rotation du premier capteur d'angle (25) se situe dans un premier intervalle prédéfini (A) et lorsque l'angle de rotation gauche ou droit du volant (20) est supérieur à la première valeur prédéfinie et inférieur ou égal à la seconde valeur prédéfinie, l'angle de rotation du premier capteur d'angle (25) se situe dans un deuxième intervalle prédéfini (B),

le deuxième intervalle prédéfini (B) inclut un premier sous-intervalle (B1) et un second sous-intervalle (B2) fournis respectivement au niveau de deux extrémités du premier intervalle prédéfini (A) ;

lorsque l'angle de rotation du premier capteur d'angle (25) se situe dans le premier sous-intervalle (B1), le module de commande (60) est configuré pour commander une vitesse de rotation de la roue motrice (12) du côté gauche pour qu'elle soit inférieure à celle de la roue motrice (12) du côté droit ; et

lorsque l'angle de rotation du premier capteur d'angle (25) se situe dans le deuxième sous-intervalle (B2), le module de commande (60) est configuré pour commander la vitesse de rotation de la roue motrice (12) du côté droit pour qu'elle soit inférieure à celle de la roue motrice (12) du côté gauche.

4. Outil de jardin selon la revendication 3, dans lequel, lorsque l'angle de rotation gauche ou droit du volant (20) est supérieur à la seconde valeur prédéfinie, l'angle de rotation du premier capteur d'angle (25) se situe dans un troisième intervalle prédéfini (C),

le troisième intervalle prédéfini (C) inclut un troisième sous-intervalle (C1) et un quatrième sous-intervalle (C2), le troisième sous-intervalle (C1) et le quatrième sous-intervalle (C2) sont prévus au niveau de deux extrémités de l'union du premier intervalle prédéfini (A) et du deuxième intervalle prédéfini (B), respectivement ;

lorsque l'angle de rotation du premier capteur d'angle (25) se situe dans le troisième sous-intervalle (C1), le module de commande (60) est configuré pour commander la rotation de la roue motrice (12) du côté gauche dans une direction opposée ; et

lorsque l'angle de rotation du premier capteur d'angle (25) se situe dans le quatrième sous-intervalle (C2), le module de commande (60) est configuré pour commander la rotation de la roue motrice (12) du côté droit dans une direction opposée.

5. Outil de jardin selon la revendication 1, dans lequel le premier intervalle prédéfini (A) est [-1°, +1°].

6. Outil de jardin selon la revendication 3, dans lequel,

le deuxième intervalle prédéfini (B) est [-11°, -1°) ∪ (+1°, +11°],
dans lequel le premier sous-intervalle (B1) est [-11°, -1° ) et le deuxième sous-intervalle (B2) est (+1°, +11°].

7. Outil de jardin selon la revendication 4, dans lequel,

le troisième intervalle prédéfini (C) est [-21°, -11°) ∪ (+11°, +21°],
dans lequel le troisième sous-intervalle (C1) est [-21°, -11°) et le quatrième sous-intervalle (C2) est ( +11°, +21°].

8. Outil de jardin selon la revendication 4, dans lequel l'outil de jardin comprend en outre un dispositif de commande, le dispositif de commande comprenant :

une pédale d'accélérateur (30) ; et
un second capteur d'angle (33), dans lequel la pédale d'accélérateur (30) est reliée au second capteur d'angle (33) par transmission via un mécanisme de liaison et le second capteur d'angle (33) est relié électriquement au module de commande (60), et
dans lequel le module de commande (60) est configuré pour commander une vitesse de rotation de la roue motrice (12) pour qu'elle augmente lorsqu'un angle de rotation du second capteur d'angle (33) augmente.

9. Outil de jardin selon la revendication 8, dans lequel,

lorsque l'angle de rotation du premier capteur d'angle (25) se situe dans le premier intervalle prédéfini (A), la vitesse de rotation $N_L$ de la roue motrice (12) du côté gauche et la vitesse de rotation $N_R$ de la roue motrice (12) du côté droit répondent aux exigences suivantes :

$$N_L = N_R = \left(N_{max}/(U_{max} - U_{min})\right) * (U_2 - U_{min});$$

dans lequel, $N_{max}$ représente une vitesse de rotation maximale de la roue motrice (12), $U_{max}$ représente une tension de sortie maximale du second capteur d'angle (33), $U_{min}$ représente une tension de sortie minimale du second capteur d'angle (33) et $U_2$ représente une tension de sortie en temps réel du second capteur d'angle (33) ; et

dans lequel une tension de sortie du second capteur d'angle (33) augmente avec une augmentation de l'angle de rotation du second capteur d'angle (33).

**10.** Outil de jardin selon la revendication 8, dans lequel,

lorsque l'angle de rotation du premier capteur d'angle (25) se situe dans le premier sous-intervalle (B1), la vitesse de rotation $N_L$ de la roue motrice (12) du côté gauche et la vitesse de rotation $N_R$ de la roue motrice (12) du côté droit répondent aux exigences suivantes :

$$N_R = \left(N_{max}/(U_{max} - U_{min})\right) * (U_2 - U_{min}) \; ;$$

$$N_L = \left((U_1 - U_a)/(U_b - U_a)\right)* N_R;$$

dans lequel, $N_{max}$ représente une vitesse de rotation maximale de la roue motrice (12), $U_{max}$ représente une tension de sortie maximale du second capteur d'angle (33), $U_{min}$ représente une tension de sortie minimale du second capteur d'angle (33), $U_2$ représente une tension de sortie en temps réel du second capteur d'angle (33), $U_a$ et $U_b$ représentent respectivement une tension de sortie minimale et une tension de sortie maximale du premier capteur d'angle (25) lorsque l'angle de rotation du premier capteur d'angle (25) se situe dans le premier sous-intervalle (B1) et $U_1$ représente une tension de sortie en temps réel du premier capteur d'angle (25) ; et dans lequel la tension de sortie en temps réel $U_1$ du premier capteur d'angle (25) augmente avec une augmentation de l'angle de rotation du premier capteur d'angle (25) et la tension de sortie en temps réel $U_2$ du second capteur d'angle (33) augmente avec une augmentation de l'angle de rotation du second capteur d'angle (33).

**11.** Outil de jardin selon la revendication 8, dans lequel,

lorsque l'angle de rotation du premier capteur d'angle (25) se situe dans le deuxième sous-intervalle (B2), la vitesse de rotation $N_L$ de la roue motrice (12) du côté gauche et la vitesse de rotation $N_R$ de la roue motrice (12) du côté droit répondent aux exigences suivantes :

$$N_L = \left(N_{max}/(U_{max} - U_{min})\right) * (U_2 - U_{min}) \; ;$$

$$N_R = \left((U_d - U_1)/(U_d - U_c)\right) * N_L \; ;$$

dans lequel, $N_{max}$ représente une vitesse de rotation maximale de la roue motrice (12), $U_{max}$ représente une tension de sortie maximale du second capteur d'angle (33), $U_{min}$ représente une tension de sortie minimale du second capteur d'angle (33), $U_2$ représente une tension de sortie en temps réel du second capteur d'angle (33), $U_c$ et $U_d$ représentent respectivement une tension de sortie minimale et une tension de sortie maximale du premier capteur d'angle (25) lorsque l'angle de rotation du premier capteur d'angle (25) se situe dans le deuxième sous-intervalle (B2), et $U_1$ représente une tension de sortie en temps réel du premier capteur d'angle (25) ; et dans lequel la tension de sortie en temps réel $U_1$ du premier capteur d'angle (25) augmente avec une augmentation de l'angle de rotation du premier capteur d'angle (25) et la tension de sortie en temps réel $U_2$ du second capteur d'angle (33) augmente avec une augmentation de l'angle de rotation du second capteur d'angle (33).

**12.** Outil de jardin selon la revendication 8, dans lequel

lorsque l'angle de rotation du premier capteur d'angle (25) se situe dans le troisième sous-intervalle (C1), la vitesse de rotation $N_L$ de la roue motrice (12) du côté gauche et la vitesse de rotation $N_R$ de la roue motrice (12) du côté droit répondent aux exigences suivantes :

$$N_R = \left(N_{max}/(U_{max} - U_{min})\right) * (U_2 - U_{min}) \; ;$$

$$N_L = -\left((U_f - U_1)/(U_f - U_e)\right) * N_R \; ;$$

dans lequel, $N_{max}$ représente une vitesse de rotation maximale de la roue motrice (12), $U_{max}$ représente une tension de sortie maximale du second capteur d'angle (33), $U_{min}$ représente une tension de sortie minimale du second capteur d'angle (33), $U_2$ représente une tension de sortie en temps réel du second capteur d'angle (33), $U_e$ et $U_f$ représentent respectivement une tension de sortie minimale et une tension de sortie maximale du premier capteur d'angle (25) lorsque l'angle de rotation du premier capteur d'angle (25) se situe dans le troisième sous-intervalle (C1) et $U_1$ représente une tension de sortie en temps réel du premier capteur d'angle (25) ; et dans lequel la tension de sortie en temps réel $U_1$ du premier capteur d'angle (25) augmente avec une augmentation de l'angle de rotation du premier capteur d'angle (25) et la tension de sortie en temps réel $U_2$ du second capteur d'angle (33) augmente avec une augmentation de l'angle de rotation du second capteur d'angle (33).

13. Outil de jardin selon la revendication 8, dans lequel,

lorsque l'angle de rotation du premier capteur d'angle (25) se situe dans le quatrième sous-intervalle (C2), la vitesse de rotation $N_L$ de la roue motrice (12) du côté gauche et la vitesse de rotation $N_R$ de la roue motrice (12) du côté droit répondent aux exigences suivantes :

$$N_L = \left(N_{max}/(U_{max} - U_{min})\right) * (U_2 - U_{min})$$

$$N_R = -\left((U_1 - U_g)/(U_h - U_g)\right) * N_L$$

dans lequel, $N_{max}$ représente une vitesse de rotation maximale de la roue motrice (12), $U_{max}$ représente une tension de sortie maximale du second capteur d'angle (33), $U_{min}$ représente une tension de sortie minimale du second capteur d'angle (33), $U_2$ représente une tension de sortie en temps réel du second capteur d'angle (33), $U_g$ et $U_h$ représentent respectivement une tension de sortie minimale et une tension de sortie maximale du premier capteur d'angle (25) lorsque l'angle de rotation du premier capteur d'angle (25) se situe dans le quatrième sous-intervalle (C2) et $U_1$ représente une tension de sortie en temps réel du premier capteur d'angle (25) ; et dans lequel la tension de sortie en temps réel $U_1$ du premier capteur d'angle (25) augmente avec une augmentation de l'angle de rotation du premier capteur d'angle (25) et la tension de sortie en temps réel $U_2$ du second capteur d'angle (33) augmente avec une augmentation de l'angle de rotation du second capteur d'angle (33).

14. Procédé de commande d'un outil de jardin, dans lequel l'outil de jardin comprend un premier capteur d'angle (25) configuré pour identifier une rotation d'un volant (20), le premier capteur d'angle (25) étant relié électriquement à un module de commande (60), le module de commande (60) étant respectivement relié électriquement à une roue motrice gauche (12) et à une roue motrice droite (12), le procédé comprend :

l'obtention d'un signal de détection à partir du premier capteur d'angle (25) ; et
la commande de vitesses de rotation de la roue motrice gauche (12) et de la roue motrice droite (12) selon le signal de détection, comprenant :

la commande de la roue motrice gauche (12) et de la roue motrice droite (12) pour tourner à des vitesses égales lorsqu'un angle de rotation gauche ou droit du volant (20) est inférieur ou égal à une première valeur prédéfinie, dans lequel la première valeur prédéfinie n'inclut pas zéro ;
la commande de la vitesse de rotation de la roue motrice gauche (12) pour qu'elle soit inférieure à celle de la roue motrice droite (12) lorsque le volant (20) tourne vers la gauche et que l'angle de rotation est supérieur à la première valeur prédéfinie et inférieur ou égal à une seconde valeur prédéfinie ;
la commande de la roue motrice gauche (12) pour qu'elle tourne vers l'arrière lorsque le volant (20) tourne vers la gauche et que l'angle de rotation est supérieur à la seconde valeur prédéfinie ;
la commande de la vitesse de rotation de la roue motrice droite (12) pour qu'elle soit inférieure à celle de la roue motrice gauche (12) lorsque le volant (20) tourne vers la droite et que l'angle de rotation est supérieur à la première valeur prédéfinie et inférieur ou égal à la seconde valeur prédéfinie ; et
la commande de la roue motrice droite (12) pour qu'elle tourne vers l'arrière lorsque le volant (20) tourne vers la droite et que l'angle de rotation est supérieur à la seconde valeur prédéfinie, dans lequel,

lorsqu'un angle de rotation gauche ou droit du volant (20) est inférieur ou égal à la première valeur prédéfinie, la roue motrice gauche (12) et la roue motrice droite (12) tournent à des vitesses égales dans une même direction, dans lequel la première valeur prédéfinie n'inclut pas zéro ;

lorsque l'angle de rotation gauche ou droit du volant (20) est supérieur à la première valeur prédéfinie et inférieur ou égal à la seconde valeur prédéfinie, la roue motrice gauche (12) et la roue motrice droite (12) tournent à des vitesses différentes dans la même direction ; et

lorsque l'angle de rotation gauche ou droit du volant (20) est supérieur à la seconde valeur prédéfinie, l'une de la roue motrice gauche (12) et de la roue motrice droite (12) tourne vers l'arrière et l'autre tourne vers l'avant, à des vitesses égales.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

**EP 4 389 565 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013163317 A